# EUROPÄISCHE PATENTANMELDUNG

(11) **EP 2 146 243 A1**
(43) Veröffentlichungstag der Anmeldung: **20.01.2010**
(21) Anmeldenummer: 09164548.1
(22) Anmeldetag: 03.07.2009
(51) Int. Cl.: G03B 21/28, G02B 26/08, H04N 5/74, H04N 13/00

(54) **LED- Effektscheinwerfer**

(30) Priorität: 17.07.2008 DE 102008033545
(71) Anmelder: Osram Gesellschaft mit beschränkter Haftung, 81536 München (DE)
(72) Erfinder: Niedermeier, Peter, 80995, München (DE)

(57) **Zusammenfassung**

Der LED-Effektscheinwerfer weist eine bildgebende Einheit, insbesondere Spiegel, auf sowie mindestens eine Lichtquelle mit mindestens einer Leuchtdiode zur Bestrahlung der bildgebenden Einheit.

## Beschreibung

Die Erfindung betrifft einen Effektscheinwerfer.

Es sind zur Abbildung von stehenden Bildern oder Videos LED-Projektoren bekannt, bei denen Leuchtdioden (LEDs) als Lichtquelle zum Einsatz kommen. Bildgebend ist dabei meist ein Mikrospiegelarray ("Digital Light Processing"; DLP)-Element, bekannt sind aber auch bildgebende LCoS-Elemente oder LCD-Transmissions-Elemente.

Aus der Theater- und Veranstaltungstechnik ist ein sog. "Moving Head" bekannt (manchmal auch als kopfbewegter Scheinwerfer, Kopfdreher oder im deutschen Technikerjargon auch als Wackellampe (Wackeleimer) oder kurz Wackler bezeichnet), welcher ein frei beweglicher Multifunktionsscheinwerfer ist. Er lässt sich um eine oder mehrere Achsen schwenken und ist meist mit einem Farbwechslersystem ausgestattet. Ebenso lässt sich der Lichtaustritt regulieren. Ein Moving Head besteht aus 3 Baugruppen, nämlich dem Sockel ("Base"), dem Arm oder Bügel ("Yoke") und dem Kopf ("Head"). Bei kopfbewegten Scheinwerfer bewegt sich der Kopf des Scheinwerfers mit dem Leuchtmittel selbst. Der Arm ist das Verbindungsglied zwischen Base und Kopf und führt die horizontale Drehbewegung (Pan) aus, des Weiteren enthält der Arm die Antriebsmechanik für die vertikale Bewegung des Kopfes. Die horizontale Drehbewegung ist meist bis zu 540° möglich. Der Kopf enthält die eigentliche Projektionseinheit des Moving Heads und beherbergt die Lampe sowie die Effektfilter und die Optik. Der Kopf führt die Schwenkbewegung "Tilt" aus, zumeist in einem Schwenkwinkel von ca. 270°. Durch diese Konstruktion erhält man eine sehr hohe Bewegungsfreiheit, so dass man das Licht des Projektors im Rahmen seiner mechanischen Bewegungsfreiheit abhängig vom Ort der Aufhängung oder des Aufstellens nahezu überall hin ausrichten kann. Typischerweise kommen Entladungslampen mit hoher Farbtemperatur und Lichtleistung zum Einsatz, die in Kombination mit dichroitischen Farbfiltern brillante Farben erzeugen. Wechsel- und drehbare Musterschablonen (sog. Gobos) aus Metall oder Glas sowie andere optische Zusatzfunktionen wie Iris, Prisma (oft auch drehbar), Shutter (als optischer Verschluss z. B für Stroboskop- und Pulse-Effekte) und Dimmer (zum Dimmen der Helligkeit) ermöglichen eine Vielzahl von Einsatzmöglichkeiten und Effekten.

Die Ansteuerung erfolgt meist mittels des DMX 512-Protokolls von einem Lichtsteuerpult. Die Stromversorgung läuft separat. Meist findet sich an den Geräten noch eine Buchse zum Durchschleifen des DMX-Signals zu anderen Scheinwerfern. Moving Heads können auch über Desktop-PC, die mit DMX-Ausgängen nachgerüstet sind, angesteuert werden. Viele der PC-Software-Lösungen, sowie zunehmend auch klassische Licht-Pulte, setzen zur vereinfachten Programmierung auf 3D-Visualizer, die in Echtzeit die Programmierung simulieren.

Es sind als Untergruppe der kopfbewegten Scheinwerfer sog. Washlights bekannt, die statt des konventionellen Aufbaus aus Entladungslampe und subtraktiver Farbmischung direkt auf eine additive Farbmischung per LEDs zurückgreifen. Washlights entsprechen den konventionellem Fresnelscheinwerfern der Bühnen und Theatertechnik und verfügen meist nur über ein dichroitisches Farbmischsystem (subtraktive Farbmischung im CMY-Raum) und eine verfahrbare Linse oder einen Frostfilter für die Steuerung des Abstrahlwinkels. Der kompakteren Bauform und geringeren Leistungsaufnahme der LED-Washlights stehen bisher Defizite im optischen System (meist unsaubere Mischung, kein regelbarer Abstrahlwinkel) und im Vergleich ein sehr niedriger Farbwiedergabeindex gegenüber.

Es sind als Untergruppe der kopfbewegten Scheinwerfer ferner sog. "Spots" oder "Profiler" bekannt, welche einer Projektionsleuchte entprechen. Sie sind wegen ihrer Fähigkeit zur scharfen Abbildung mit wesentlich mehr Effekten ausgestattet als Washlights. Beide Leuchtentypen verfügen üblicherweise über einen mechanischen Dimmer (bei sehr wenigen Modellen mit Halogenleuchtmittel auch über einen elektrischen Dimmer) sowie einen sehr schnellen mechanischen Verschluss, der "Shutter" genannt wird. Dabei werden meistens zwei verzahnte Blechflügel in den Strahlengang geschwenkt. Diese Einheit wird auch für Stroboskopeffekte genutzt. Bei einigen Lampentypen wird die Dimmerfunktion über Zwischenstellungen des Shutters mit ausgeführt.

Alle Anschlüsse (Stromversorgung, DMX-Elektronik und die Antriebsmechanik für den Arm, der die horizontale sogenannte "Pan"-Bewegung ausführt) sind bei aktuellen Geräten im Sockel untergebracht.

Es ist die Aufgabe der vorliegenden Erfindung, eine besonders flexible und einfach implementierbare Möglichkeit zur Effektbeleuchtung bereitzustellen.

Diese Aufgabe wird mittels eines Effektscheinwerfers nach Anspruch 1 gelöst. Bevorzugte Ausführungsformen sind insbesondere den abhängigen Ansprüchen entnehmbar.

Der Effektscheinwerfer weist mindestens eine bildgebende Einheit, bevorzugt einen Spiegel, und mindestens eine Lichtquelle mit mindestens einer Leuchtdiode zur Bestrahlung der bildgebenden Einheit auf.

Durch die Verwendung der LED-Lichtquelle zusammen mit der bildgebenden Einheit lassen sich frei gestaltbare Bilder bzw. Figuren auch ohne Schablonen oder Shutter erzeugen. Durch den Einsatz der LEDs kann zudem eine sehr gute Unempfindlichkeit gegen Erschütterungen erzielt werden. Ein Wechsel des Leuchtmittels ist bei richtiger Kühlung aufgrund der deutlich höheren Lebensdauer der LEDs nicht nötig. Die Kombination von schnellen Videos und zusätzlicher mechanischer Ablenkung kann die bisherigen Effekte und zusätzlich schnelle Wechsel in Farbe und Form erzeugen. Dadurch sind z. B. auch 3D-Anwendungen mit einer Shutterbrille möglich.

Als bildgebende Einheit wird insbesondere eine bildpunktartig ansteuerbare bzw. schaltende bildgebende Einheit bevorzugt.

Zur einfachen, schnellen und lichtstarken Bildgebung wird als bildgebende Einheit ein bildgebender Spiegel bevorzugt.

Es kann ein Effektscheinwerfer bevorzugt sein, bei dem der bildgebende Spiegel einen Mikrospiegelarray umfasst. Dieser ist schnell schaltend und erreicht eine hohe Auflösung.

Alternativ kann ein Effektscheinwerfer bevorzugt sein, bei dem der bildgebenden Spiegel einen LCoS-Spiegel ("Liquid Cristal on Silicon") umfasst, welcher ein reflektierendes LCD-Panel darstellt.

In noch einer alternativen Ausgestaltung kann der bildgebende Spiegel als Kombination eines einfachen Spiegels mit einem dem Spiegel optisch vor- oder nachgeschalteten Transmissions-LCD ausgestaltet sein. Ein solcher LCD-Projektor ist grundsätzlich bekannt.

Alternativ ist auch ein D-ILA ("Direct Driven Image Light Amplifier")-Projektor einsetzbar.

Um eine hohe Lichtstärke auch bei schnellen Schaltzeiten, entsprechend hohen Frame-Raten) zu erreichen, wird ein Effektscheinwerfer bevorzugt, bei dem die mindestens eine Leuchtdiode eine Leistung von mehr als 5 Watt aufweist, also eine Hochleistungs-LED ist. Es wird insbesondere ein Einsatz von Hochleistungs-LEDs bevorzugt, mit denen man auch ultrakurze Blitze von weniger als 10 µs, speziell weniger als 5 µs, aussenden kann. Bei gleichzeitig hoher Lichtleistung lässt sich bei ausreichender Leuchtstärke eine Frame-Rate von 25 x 24 oder sogar mehr erzeugen. Dadurch lassen sich z. B. Shuttereffekte nachbilden. Auch wird der sog. Regenbogeneffekt vermieden.

Zur Farbsteuerung und / oder Intensitätsskalierung wird ein Effektscheinwerfer bevorzugt, der mehrere Leuchtdioden aufweist. Die Leuchtdioden können als getrennte LED-Lampen vorliegen oder als zumindest teilweise auf einem gemeinsamen Substrat montierte Einzel-LED-Chips (LED-Modul).

Zur Farbsteuerung wird insbesondere ein Effektscheinwerfer bevorzugt, bei dem die Leuchtdioden jeweils mindestens eine rote Leuchtdiode, eine grüne Leuchtdiode und eine blaue Leuchtdiode umfassen, um den RGB-Raum abzudecken. Alternativ können andere Farben verwendet werden, welche den RGB-Raum möglichst weit abdecken. Dadurch kann auch mittels einer additiven Farbmischung ein weißes Licht erzeugt werden. Dabei ist die Zahl der Leuchtdioden (LED-Lampen und / oder Einzel-LED-Chips) nicht beschränkt und kann für jede Farbe individuell sein. So können mehr grüne oder rote LEDs als andere LEDs vorhanden sein, z. B. um eine bestimmte Farbstärke in Abhängigkeit von einer LED-Leuchtstärke zu erreichen.

Zur Erweiterung des Farbraums und um einen warm-weißen Farbton auf einfache Art erreichen zu können, wird es bevorzugt, wenn die Lichtquelle mindestens eine gelbe, insbesondere bernsteinfarbene ('amber') Leuchtdiode aufweist.

Zur besonders lichtstarken und farbhomogenen Erzeugung von weißem Licht wird es bevorzugt, wenn die Lichtquelle mindestens eine weiße Leuchtdiode aufweist, z. B. eine Konversionsdiode mit blauer Primärstrahlung und einem Leuchtmittel zur Umwandlung blauer Strahlung in gelbe Strahlung.

Das Licht braucht kein sichtbares Licht zu sein, sondern kann auch IR-Licht oder UV-Licht sein. So mag ein Effektscheinwerfer bevorzugt sein, bei dem die Leuchtdioden mindestens eine IR-Leuchtdiode umfassen. Dadurch können beispielsweise Betrachter mit einer Spezialbrille die IR-Information betrachten, solche ohne Brille hingegen nicht.

So mag ein auch Effektscheinwerfer bevorzugt sein, bei dem die Leuchtdioden mindestens eine UV-Leuchtdiode umfassen, um phosphorisierende Farben hervorzuheben.

Zur passenden Bestrahlung des Spiegels wird ein Effektscheinwerfer bevorzugt, der einen Strahlkombinierer zum Zusammenführen der von den Leuchtdioden ausgehenden Lichtstrahlen aufweist.

Es wird insbesondere ein Effektscheinwerfer bevorzugt, bei dem der von dem Strahlkombinierer ausgegebene kombinierte Lichtstrahl, abhängig von der Ansteuerung, als weißer Lichtstrahl ausgebildet sein kann, z. B. durch additives Mischen des Lichts von farbigen LEDs.

Um das vom bildgebenden Spiegel abgestrahlte Licht großflächig zu verschieben, ist dem bildgebenden Spiegel vorzugsweise ein beweglicher Spiegel, insbesondere Drehspiegel, nachgeschaltet.

Zur einfachen Ansteuerung kann ein Effektscheinwerfer bevorzugt sein, der eine interne Steuereinheit mit auswählbaren Leuchtmustern aufweist.

Es kann zur besonders flexiblen Abbildung von Bildern ein Effektscheinwerfer bevorzugt sein der mit einer externen programmierbaren Steuereinheit verbindbar ist, insbesondere mit einem Computer. Dies kann beispielsweise über einem DMX-Anschluss realisiert werden.

Der Effektscheinwerfer ist besonders bevorzugt als kopfbewegter Profilscheinwerfer ausgestaltet, wobei die Lichtquelle und der bildgebende Spiegel in einem Kopf des kopfbewegten Profilscheinwerfers untergebracht sind. Allgemein kann der Effektscheinwerfer aber beispielsweise auch ein Scanner, Flower, Centerpiece, Wallwasher, Wash, Spot oder Logo- und Goboprojektor sein.

In der folgenden Figur wird die Erfindung anhand eines Ausführungsbeispiels schematisch genauer beschrieben.

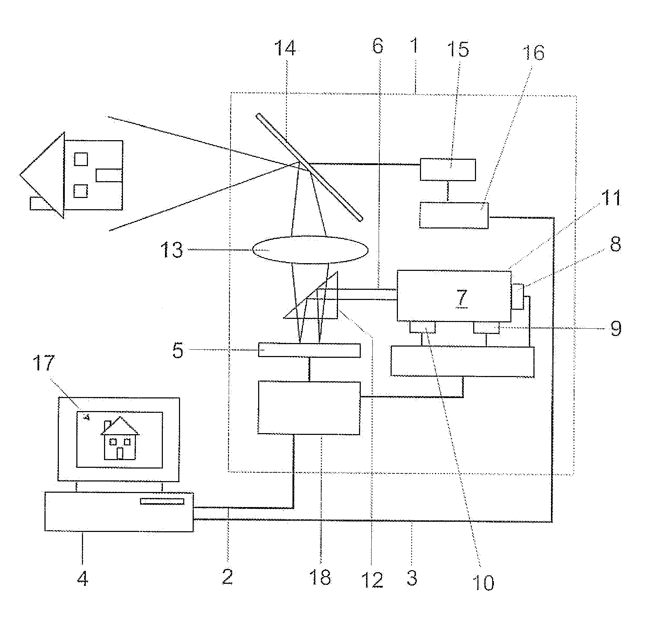

- FIG 1: zeigt eine Prinzipskizze eines System aus einem Effektscheinwerfer und einem Computer.

FIG 1 zeigt ein System aus einem Effektscheinwerfer in Form eines kopfbewegten Profilscheinwerfers ('Moving Head') 1, der über zwei Steuerleitungen 2,3 mit einem als Steuergerät dienenden Personal Computer 4 verbunden ist.

Der Profilscheinwerfer 1 weist einen bildgebenden Spiegel in Form eines Mikrospiegelarrays 5 auf, der beispielsweise von der Fa. Texas Instruments erhältlich ist. Dieses Mikrospiegelarray 5 ist in der Lage, einen auf ihn auftreffenden Lichtstrahl 6 pixelweise zu steuern, was dem Fachmann gut bekannt ist. Der auf ihn auftreffende zu steuernde ('modulierende') Lichtstrahl 6 wird hier mittels einer LED-Lichtquelle 7 erzeugt, welche symbolisch je eine rote LED 8, eine grüne LED 9 und eine blaue LED 10 aufweist, die optisch mit einem Strahlkombinierer 11 gekoppelt sind. Im Strahlkombinierer 11 werden die von den LEDs 8,9,10 ausgestrahlten Lichtstrahlen in den gemeinsamen Lichtstrahl 6 kombiniert, der somit ein additives Mischlicht der Lichtstrahlen darstellt. Zur geometrischen Anpassung des vom Kombinierer 11 bzw. der Lichtquelle 7 ausgegebenen Lichtstrahls 6 an das Mikrospiegelarray 5 ist eine Optik in Form eines Umlenkprismas 12 in den Gang des Lichtstrahls 6 eingesetzt. Nach Auftreffen des Lichtstrahls 6 auf das Mikrospiegelarray 5 wird es entsprechend eines über die Steuerleitung 2 eingegebenen Steuersignals moduliert und folgend durch eine weitere Optik in Form einer Linse 13 auf einen Drehspiegel 14 aufgegeben. Der Drehspiegel 14 wird mittels eines Motors 15 gedreht, welcher mittels einer damit verbundenen Motorsteuerung 16 drehzahl- und richtungssteuerbar ist. Die Motorsteuerung 16 wiederum ist zu ihrer Ansteuerung über die Steuerleitung 3 mit dem Computer 4 verbunden.

Genauer gesagt enthalten die über die Steuerleitung 2 gesendeten Steuersignal eine Bildinformation (VGA, DVI usw.) über ein vom Effektscheinwerfer 1 abzustrahlendes Bild, z. B. eine Form des Bildes 17, dessen Bewegung, Farbe und so weiter. Die Steuerleitung 2 führt zu einer Formatierungseinheit 18 des Effektscheinwerfer 1, in welcher diese Steuerinformation umgesetzt wird in getrennte Ansteuerinformation für das Mikrospiegelarray 5 einerseits und in Ansteuerinformation für die Lichtquelle 7 andererseits. So mag an die Lichtquelle eine Farbinformation gesendet werden, auf deren Grundlage die Lichtintensität gesenkt oder einzelne oder sogar alle LEDs 8, 9, 10 ausgeschaltet werden können, was im Vergleich zu herkömmlichen Hochdrucklampen Energie einspart, welche beim Betrieb des Effektscheinwerfers 1 immer angeschaltet sein müssen. Zudem lässt sich dann durch die dadurch geringere thermische Belastung die Lebensdauer der Lichtquelle erhöhen. Mittels eines Ausschaltens der LEDs lässt sich auch ein Kontrast erhöhen.

Selbstverständlich ist die vorliegende Erfindung nicht auf das gezeigte Ausführungsbeispiel beschränkt.

So kann statt eines Personal Computers auch jede andere programmierbare Steuereinheit verwendet werden, z. B. ein Laptop, Palmtop, ein PDA usw., als auch eine nicht-programmierbare Steuereinheit, welche darin gespeicherte Leuchtmuster aufweist, welche ggf. ausgetauscht werden können.

Insbesondere durch die passende Software auf einem PC und entsprechende Ansteuerung über eine Videoschnittstelle (VGA, DVI, HDMI) und gleichzeitiger Ansteuerung über übliche Schnittstellen in der Bühnentechnik (DMX), die ggf. über eine gemeinsame Steuerleitung übertragen werden, kann man einen derartigen Effektscheinwerfer steuern.

Ferner kann auch auf einen Drehspiegel verzichtet werden, falls es nur darum geht, das an die Projektionsfläche geworfene Bild zu drehen, da dies auch elektronisch möglich ist.

Die LEDs können mittels einer aktiven Kühleinheit, wie einem Lüfter oder einem Flüssigkeitskühler gekühlt sein, oder nicht.

Der Effektscheinwerfer kann für Indoor-Anwendungen und Outdoor-Anwendungen ausgelegt werden.

### Bezugszeichenliste

- 1: Profilscheinwerfer
- 2: Steuerleitung
- 3: Steuerleitung
- 4: Computer
- 5: Mikrospiegelarray
- 6: Lichtstrahl
- 7: LED-Lichtquelle
- 8: rote LED
- 9: grüne LED
- 10: blaue LED
- 11: Strahlkombinierer
- 12: Umlenkprisma
- 13: Linse
- 14: Drehspiegel
- 15: Motor
- 16: Motorsteuerung
- 17: Bild
- 18: Formatierungseinheit

## Patentansprüche

**1.** Effektscheinwerfer (1), aufweisend
- eine bildgebende Einheit (5), insbesondere bildpunktansteuerbare bildgebende Einheit (5), und
- mindestens eine Lichtquelle (7) mit mindestens einer Leuchtdiode (8,9,10) zur Bestrahlung der bildgebenden Einheit (5).

**2.** Effektscheinwerfer (1) nach Anspruch 1, bei dem die bildgebende Einheit einen bildgebenden Spiegel (5) umfasst.

**3.** Effektscheinwerfer (1) nach Anspruch 2, bei dem der bildgebende Spiegel einen Mikrospiegelarray (5) umfasst.

**4.** Effektscheinwerfer nach Anspruch 2, bei dem der bildgebenden Spiegel einen LCoS-Spiegel umfasst.

**5.** Effektscheinwerfer (1) nach einem der vorhergehenden Ansprüche, bei dem die mindestens eine Leuchtdiode (8,9,10) eine Leistung von mehr als 5 Watt aufweist.

**6.** Effektscheinwerfer (1) nach einem der vorhergehenden Ansprüche, aufweisend mehrere Leuchtdioden (8,9,10).

**7.** Effektscheinwerfer (1) nach Anspruch 6, bei dem die Leuchtdioden rote, grüne und blaue Leuchtdioden (8,9,10) umfassen.

**8.** Effektscheinwerfer (1) nach Anspruch 6 oder 7, bei dem die Leuchtdioden mindestens eine gelbe und / oder eine weiße Leuchtdiode aufweisen.

**9.** Effektscheinwerfer nach einem der Ansprüche 6 bis 8, bei dem die Leuchtdioden mindestens eine IR-Leuchtdiode und / oder mindestens eine UV-Leuchtdiode umfassen.

**10.** Effektscheinwerfer (1) nach einem der Ansprüche 6 bis 9, aufweisend einen Strahlkombinierer (11) zum Zusammenführen der von den Leuchtdioden (8,9,10) ausgehenden Lichtstrahlen.

**11.** Effektscheinwerfer (1) nach einem der vorhergehenden Ansprüche, bei dem der von dem Strahlkombinierer (11) ausgegebene kombinierte Lichtstrahl (6) ein weißer Lichtstrahl sein kann.

**12.** Effektscheinwerfer (1) nach einem der vorhergehenden Ansprüche, bei welchem dem bildgebenden Spiegel (5) ein beweglicher Spiegel, insbesondere Drehspiegel (14), nachgeschaltet ist.

**12.** Effektscheinwerfer nach einem der vorhergehenden Ansprüche, ferner aufweisend eine interne Steuereinheit mit auswählbaren Leuchtmustern.

**14.** Effektscheinwerfer (1) nach einem der vorhergehenden Ansprüche, der mit einer externen programmierbaren Steuereinheit verbindbar ist, insbesondere mit einem Computer (4).

**15.** Effektscheinwerfer, der als kopfbewegter Profilscheinwerfer (1) ausgestaltet ist, wobei die Lichtquelle (7) und der bildgebende Spiegel (5) in einem Kopf des kopfbewegten Profilscheinwerfer (1) untergebracht sind.
